# EUROPÄISCHE PATENTSCHRIFT

(11) **EP 1 205 268 B1**
(45) Veröffentlichungstag und Bekanntmachung des Hinweises auf die Patenterteilung: **28.07.2004**
(21) Anmeldenummer: 00124431.8
(22) Anmeldetag: 08.11.2000
(51) Int. Cl.: B21D 28/26, B23Q 1/26

(54) **Werkzeugmaschine mit Vorschubeinrichtung**
Machine tool with drive device
Machine-outil avec dispositif d'avance

(43) Veröffentlichungstag der Anmeldung: 15.05.2002
(73) Patentinhaber: Trumpf GmbH & Co, D-71254 Ditzingen (DE)
(72) Erfinder: Schmidt, Christoph, 70195 Stuttgart (DE)
(74) Vertreter: KOHLER SCHMID + PARTNER

(56) Entgegenhaltungen:
- EP-A- 0 931 603
- DE-A- 3 826 827
- DE-A- 3 930 463
- DE-A- 19 804 419
- DE-U- 29 507 141
- US-A- 4 532 843
- PATENT ABSTRACTS OF JAPAN vol. 014, no. 315 (M-0995), 6. Juli 1990 (1990-07-06) -& JP 02 104428 A (MURATA MACH LTD), 17. April 1990 (1990-04-17)

## Beschreibung

Die Erfindung betrifft eine Werkzeugmaschine mit wenigstens einer Bearbeitungsstation sowie mit wenigstens einer Vorschubeinrichtung, mittels derer zumindest ein Werkstück und/oder zumindest ein Bearbeitungswerkzeug wenigstens in Richtung einer Bewegungsachse (x-Achse) relativ zu der Bearbeitungsstation angetrieben bewegbar ist und welche wenigstens eine Richtungsführung mit einer Tragstruktur umfasst, an welcher wenigstens eine Haltevorrichtung für ein Werkstück und/oder wenigstens eine Haltevorrichtung für ein Bearbeitungswerkzeug in Richtung der Bewegungsachse (x-Achse) angetrieben bewegbar geführt ist, wobei die Richtungsführung eine Mehrzahl von an der Tragstruktur in Richtung der Bewegungsachse (x-Achse) angetrieben bewegbar geführten und jeweils für sich gelagerten Führungseinheiten aufweist und die Haltevorrichtungen auf die Führungseinheiten verteilt an diesen angebracht sind.

Eine Werkzeugmaschine dieser Art ist aus DE 39 30 463 A1 bekannt.

Die Erfindung betrifft des Weiteren eine Werkzeugmaschine mit wenigstens einer Bearbeitungsstation sowie mit wenigstens einer Vorschubeinrichtung, mittels derer zumindest ein Werkstück und/oder zumindest ein Bearbeitungswerkzeug in einer durch eine erste (x-Achse) sowie eine zweite Bewegungsachse (y-Achse) definierten Ebene relativ zu der Bearbeitungsstation angetrieben bewegbar ist und welche zwei Richtungsführungen umfasst, wobei die erste Richtungsführung eine erste Tragstruktur aufweist, an welcher wenigstens eine Haltevorrichtung für ein Werkstück und/oder wenigstens eine Haltevorrichtung für ein Bearbeitungswerkzeug in Richtung der ersten Bewegungsachse (x-Achse) angetrieben bewegbar geführt ist, wobei die zweite Richtungsführung eine zweite Tragstruktur aufweist, an welcher die erste Tragstruktur sowie wenigstens eine ein Werkstück in Schwerkraftrichtung lagernde Werkstückauflage in Richtung der zweiten Bewegungsachse (y-Achse) angetrieben bewegbar geführt sind und wobei eine Mehrzahl von an der zweiten Tragstruktur in Richtung der zweiten Bewegungsachse (y-Achse) angetrieben bewegbar geführten Führungseinheiten vorgesehen ist.

Eine derartige Werkzeugmaschine ist in JP 02 104428 A offenbart.

Außerdem beschreibt DE 38 18 001 A1 eine Werkzeugmaschine mit einer ersten Tragstruktur in Form eines eigensteifen, in Richtung einer ersten Bewegungsachse ortsfesten und in Richtung einer zweiten Bewegungsachse verfahrbaren Schlittens. An dem genannten Schlitten in Richtung der ersten Bewegungsachse angetrieben bewegbar geführt ist eine einzelne Werkstücktragschiene, an der wiederum Pratzen als Haltevorrichtungen für das zu bearbeitende Werkstück sowie Werkzeugkassetten als Haltevorrichtungen für Bearbeitungswerkzeuge angebracht sind. Durch Verfahren der Werkstücktragschiene relativ zu dem diese lagernden eigensteifen Schlitten wird zum einen das an den mit der Werkstücktragschiene verbundenen Pratzen gehaltene Werkstück in Richtung der ersten Bewegungsachse positioniert; zum anderen werden die an der Werkstücktragschiene angebrachten Bearbeitungswerkzeuge durch die genannte Relativbewegung in Richtung der ersten Bewegungsachse in eine Ein- bzw. Auswechselposition gegenüber der Bearbeitungsstation der vorbekannten Maschine überführt. Die Werkstücktragschiene der Stanzmaschine nach DE 38 18 001 A1 muss angesichts der Massen der daran gehaltenen Bauteile, bzw. Werkzeuge und Werkstücke für die Übertragung verhältnismäßig großer Lasten in den zugehörigen eigensteifen Schlitten ausgelegt sein. Dabei ist insbesondere auch zu berücksichtigen, dass eine optimale Funktionsfähigkeit der vorbekannten Stanzmaschine eine möglichst exakte Positionierung des an der Werkstücktragschiene gehaltenen Werkstückes sowie der an der Werkstücktragschiene angebrachten Werkzeuge voraussetzt. Infolgedessen besitzt die im Falle des Standes der Technik verwendete Werkstücktragschiene einen verhältnismäßig großen Querschnitt sowie eine weitestgehend eigensteife Struktur. Auch die dementsprechende Masse der Werkstücktragschiene ist bei Betrieb der vorbekannten Stanzmaschine in Richtung der ersten Bewegungsachse zu bewegen.

Unter der Typenbezeichnung "TRUMATIC® 500 ROTATION" wird von der Firma "TRUMPF GmbH + Co. KG", 71254 Ditzingen (Deutschland) eine Werkzeugmaschine vertrieben, die bezüglich der ersten Richtungsführung ihrer Vorschubeinrichtung grundsätzlich mit dem vorstehend beschriebenen Stand der Technik nach DE 38 18 001 A1 übereinstimmt. Insbesondere besitzt auch die "TRUMATIC® 500 ROTATION" als erste Tragstruktur einen in Richtung der ersten Bewegungsachse ortsunveränderlichen eigensteifen Schlitten. Dieser ist mit ebenfalls eigensteifen, in Richtung der zweiten Bewegungsachse verlaufenden Trägern zu einer eigensteifen Gesamtkonstruktion verbunden. Auf den genannten eigensteifen Trägern ist dabei eine als Werkzeugtisch ausgebildete Werkstückauflage montiert, die mit den übrigen Teilen der Gesamtkonstruktion an einer zweiten Tragstruktur in Richtung der zweiten Bewegungsachse angetrieben bewegbar geführt ist. Auch die Eigensteifigkeit der den eigensteifen Schlitten sowie die eigensteifen Träger zur Lagerung des Werkstücktisches umfassenden Gesamtkonstruktion dient einer exakten Positionierung des zu bearbeitenden Werkstückes sowie der zu diesem Zweck zu verwendenden Bearbeitungswerkzeuge. Eine dementsprechende Masse ist bei Betrieb der "TRUMATIC® 500 ROTATION" in Richtung der zweiten Bewegungsachse zu bewegen.

Eine Verminderung der beim Maschinenbetrieb zu bewegenden Massen bei zumindest gleichermaßen exakter Führung bzw. Positionierung des oder der Werkstücke und/oder des oder der Bearbeitungswerkzeuge hat sich die vorliegende Erfindung ausgehend von dem vorstehend gewürdigten Stand der Technik zum Ziel gesetzt.

Erfindungsgemäß gelöst wird diese Aufgabe durch Werkzeugmaschinen, wie sie in den Patentansprüchen 1 und 4 beschrieben sind.

Gemäß Patentanspruch 1 ist die an der betreffenden Werkzeugmaschine in Richtung der anspruchsgemäßen Bewegungsachse zu bewegende Masse verhältnismäßig gering. Die im Falle des Standes der Technik nach DE 38 18 001 A1 vorgesehene Werkstücktragschiene ist durch eine Mehrzahl von jeweils im wesentlichen für sich gelagerten Führungseinheiten ersetzt, deren Massen in Summe geringer sind als die Masse einer entsprechenden vorbekannten Werkstücktragschiene. Eine exakte Werkstück- bzw. Werkzeugführung wird bewirkt durch die Eigensteifigkeit der Tragstruktur in Verbindung mit einer entsprechend exakten Lagerung der Führungseinheiten an dieser Tragstruktur. Während im Falle des Standes der Technik gemäß DE 38 18 001 A1 sämtliche Haltevorrichtungen für ein Werkstück bzw. sämtliche Haltevorrichtungen für ein Bearbeitungswerkzeug gemeinschaftlich einem sie an der zugehörigen Tragstruktur lagernden Bauteil, nämlich der vorbekannten Tragschiene, zugeordnet waren, ist ausweislich Patentanspruch 1 eine Zuordnungsverteilung vorgesehen. Aufgrund der Verteilung der Führungs- bzw. Lastübertragungsfunktion auf mehrere und somit auf verhältnismäßig klein bauende Führungseinheiten besteht die Möglichkeit, an den einzelnen Führungseinheiten angreifende Lasten nahe ihrem Angriffspunkt in die Tragstruktur einzuleiten. Dies wiederum wirkt sich im Sinne einer guten Eigensteifigkeit des die Tragstruktur sowie die Führungseinheiten umfassenden Gesamtsystems zur Lagerung bzw. Führung von Werkstück- und/oder Werkzeughaltevorrichtungen aus. Gemäß den kennzeichnenden Merkmalen von Patentanspruch 1 ist die Verbindung zwischen Führungseinheiten an der Tragstruktur mittels wenigstens eines Zahnstangenabschnittes und folglich mittels eines Bauteils verwirklicht, das gleichzeitig als Teil des Verfahrantriebes der jeweiligen Führungseinheiten genutzt werden kann. Außerdem ist dafür gesorgt, dass die von dem Antriebsritzel in den betreffenden Zahnstangenabschnitt aufgegebene Antriebskraft auf kurzem Wege in mehrere der anzutreibenden Führungseinheiten eingeleitet wird. Entsprechend wirkt sich aus, dass an Führungseinheiten an der Tragstruktur wenigstens ein Zahnstangenabschnitt angebracht und dabei an wenigstens einem, zugehörige Führungseinheiten miteinander verbindenden Verbindungselement befestigt ist.

Die Werkzeugmaschine gemäß Patentanspruch 4 kommt ohne die an der "TRUMATIC® 500 ROTATION" vorgesehenen, in Richtung der zweiten Bewegungsachse verlaufenden eigensteifen Träger zur Lagerung der Werkstückauflage aus. Voraussetzung hierfür ist die anspruchsgemäße Trennung der Führung der ersten Tragstruktur einerseits und der Führung der Werkstückauflage andererseits. Es können Führungseinheiten verwendet werden, die weniger massenbehaftet sind als die bislang gebräuchlichen eigensteifen Träger. Im Falle der Werkzeugmaschine nach Patentanspruch 4 wird eine exakte Werkstück- bzw. Werkzeugführung mittels der eigensteifen zweiten Tragstruktur sowie durch entsprechende Gestaltung der Lagerung der betreffenden Führungseinheiten an der zweiten Tragstruktur bewirkt. Sowohl im Falle der Werkzeugmaschine nach Patentanspruch 1 als auch im Falle der Werkzeugmaschine nach Patentanspruch 4 lässt sich die Vorschubeinrichtung aufgrund der beschriebenen Massenreduzierung mit verhältnismäßig großen Beschleunigungen betreiben. Hohe Bearbeitungsgeschwindigkeiten können daher in beiden Fällen erzielt werden.

Bevorzugte Ausführungsformen der Erfindung nach Patentanspruch 1 ergeben sich aus den abhängigen Patentansprüchen 2 und 3; besondere Ausführungsarten der Erfindung nach Patentanspruch 4 sind in den abhängigen Patentansprüchen 5 bis 12 beschrieben.

Eine einfache konstruktive Möglichkeit zur Verbindung von Führungseinheiten an der Tragstruktur ist in Patentanspruch 2 beschrieben. Eine weitere bevorzugte Ausgestaltung der Erfindung nach Patentanspruch 1 ist Patentanspruch 3 zu entnehmen.

Den Vorteil verhältnismäßig geringer in Richtung der ersten Bewegungsachse zu bewegender Massen mit dem Vorteil verhältnismäßig geringer in Richtung der zweiten Bewegungsachse zu bewegender Massen vereint die in Patentanspruch 5 beschriebene Bauart der erfindungsgemäßen Werkzeugmaschine gemäß Patentanspruch 4.

Grundsätzlich kann im Sinne der Erfindung nach Patentanspruch 4 jede Führungseinheit an der ersten Tragstruktur und/oder jede Führungseinheit an der zweiten Tragstruktur mit einem eigenen Verfahrantrieb versehen sein. Erfindungsgemäß bevorzugt wird aber eine Maschinenbauart, im Falle derer ein gemeinschaftlicher Antrieb mehrerer Führungseinheiten möglich ist und die zu diesem Zweck das kennzeichnende Merkmal von Patentanspruch 6 aufweist.

Einfache konstruktive Möglichkeiten der Gestaltung der Verbindung zwischen Führungseinheiten an der ersten Tragstruktur und/oder Führungseinheiten an der zweiten Tragstruktur der Werkzeugmaschine gemäß Patentanspruch 4 sind in den Patentansprüchen 7 und 8 beschrieben.

Bei Realisierung der kennzeichnenden Merkmale von Patentanspruch 9 im Falle der Erfindung nach Patentanspruch 4 ist die Verbindung zwischen Führungseinheiten an der ersten Tragstruktur und/oder Führungseinheiten an der zweiten Tragstruktur mittels wenigstens eines Zahnstangenabschnittes und folglich mittels eines Bauteils verwirklicht, das gleichzeitig als Teil des Verfahrantriebes der jeweiligen Führungseinheiten genutzt werden kann. Dabei ist außerdem dafür gesorgt, dass die von dem Antriebsritzel in den betreffenden Zahnstangenabschnitt aufgegebene Antriebskraft auf kurzem Wege in mehrere der anzutreibenden Führungseinheiten eingeleitet wird. Durch den letztgenannten Vorteil zeichnet sich auch die in Patentanspruch 10 beschriebene Bauart der Erfindung nach Patentanspruch 4 aus.

Eine besonders wirksame Lagerung der ersten Tragstruktur sowie der Werkstückauflage wird im Falle der Erfindung gemäß Patentanspruch 4 mittels des kennzeichnenden Merkmals von Patentanspruch 11 bewirkt.

Eine weitere bevorzugte Ausgestaltung der Erfindung nach Patentanspruch 4 ist Patentanspruch 12 zu entnehmen.

Nachstehend wird die Erfindung anhand schematischer Darstellungen zu einem Ausführungsbeispiel näher erläutert. Es zeigen:
- Figur 1: eine stark schematisierte Teildarstellung einer Werkzeugmaschine in Form einer Stanzmaschine mit C-förmigem Maschinengestell,
- Figur 2: die Stanzmaschine nach Figur 1 in der Draufsicht auf den untenliegenden Schenkel des Maschinengestelles,
- Figur 3: eine Schnittdarstellung zu der Stanzmaschine nach den Figuren 1 und 2 mit der in Figur 1 angedeuteten Schnittebene III,
- Figur 4: eine Schnittdarstellung zu der Stanzmaschine nach den Figuren 1 bis 3 mit der in Figur 1 angedeuteten Schnittebene IV und
- Figur 5: eine Schnittdarstellung zu der Stanzmaschine nach den Figuren 1 bis 4 mit der in Figur 1 angedeuteten Schnittebene V.

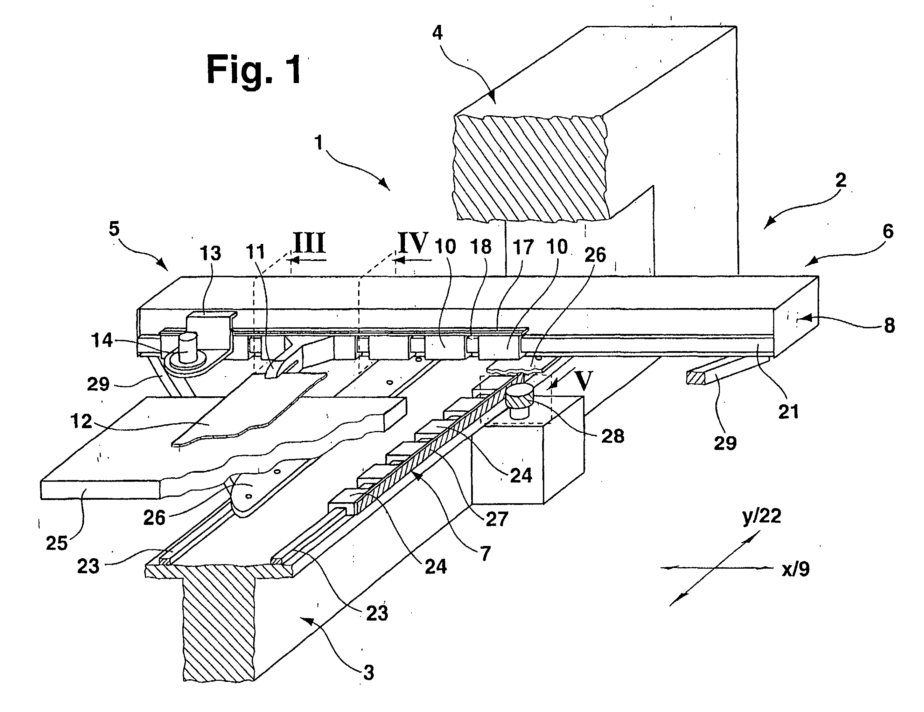

Figur 1 zeigt eine als Stanzmaschine 1 ausgebildete Werkzeugmaschine mit ihrem grundsätzlichen Aufbau. Demnach besitzt die Stanzmaschine 1 ein C-förmiges Maschinengestell 2 mit einem unteren Gestellschenkel 3 und einem oberen Gestellschenkel 4. Die beiden Gestellschenkel 3, 4 sind in Figur 1 abgebrochen dargestellt.

An dem freien Ende der Gestellschenkel 3, 4 ist die ebenfalls nicht gezeigte Bearbeitungs-, d.h. Stanzstation, der Stanzmaschine 1 vorgesehen. Diese Stanzstation ist herkömmlicher Bauart und umfasst eine an dem unteren Gestellschenkel 3 angeordnete Werkzeugaufnahme für das Stanz-Unterwerkzeug sowie eine an dem oberen Gestellschenkel 4 vorgesehene Werkzeugaufnahme für das Stanz-Oberwerkzeug.

Im Zwischenraum zwischen dem unteren Gestellschenkel 3 und dem oberen Gestellschenkel 4, also im "Rachen" der Stanzmaschine 1, ist eine Vorschubeinrichtung in Form einer Koordinatenführung 5 untergebracht. Diese umfasst eine erste Richtungsführung 6 sowie eine zweite Richtungsführung 7.

Die erste Richtungsführung 6 weist eine erste Tragstruktur in Form einer eigensteifen Tragschiene 8 auf, die sich in Richtung einer ersten Bewegungs- bzw. Koordinatenachse 9 (x-Achse) erstreckt. In Richtung der x-Achse ist an der Tragschiene 8 eine Mehrzahl von Führungseinheiten bildenden Führungswagen 10 angetrieben bewegbar geführt. Unmittelbar an den in Richtung der x-Achse voneinander beabstandeten Führungswagen 10 sind als Pratzen 11 ausgebildete Haltevorrichtungen für ein Werkstück in Form eines Bleches 12 sowie Werkzeugkassetten 13 als Haltevorrichtungen für Bearbeitungs-, d.h. Stanzwerkzeuge 14 austauschbar angebracht.

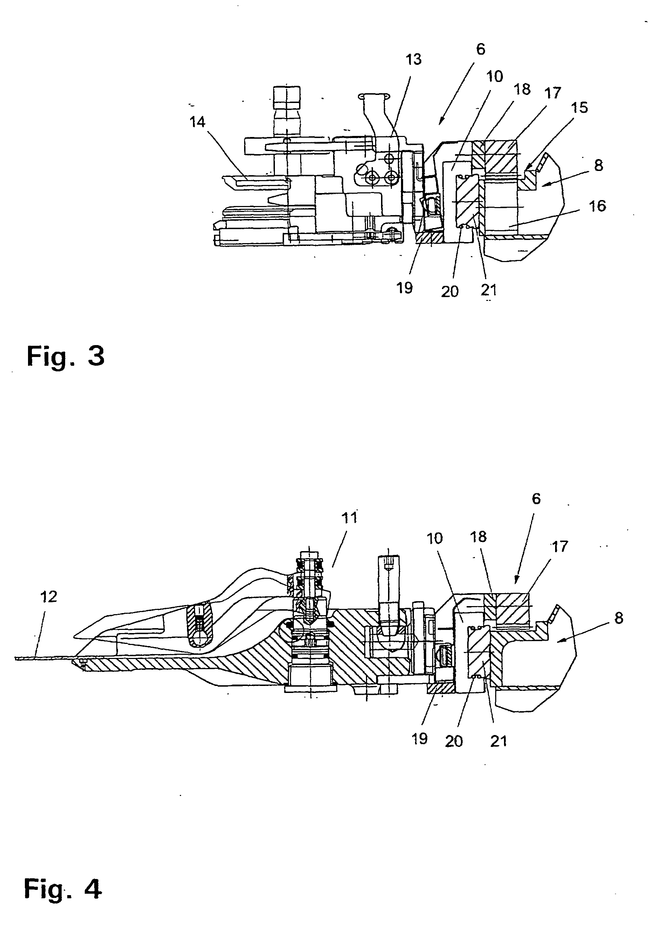

Zum Bewegen der Führungswagen 10 in Richtung der x-Achse dient ein Verfahrantrieb 15, wie ihn Figur 3 im Einzelnen zeigt und der neben einem an der Tragschiene 8 gelagerten Antriebsritzel 16 eine mit den Führungswagen 10 verbundene Zahnstange 17 aufweist. Letztere ist aus mehreren in Richtung der x-Achse aneinander anschließenden Zahnstangenabschnitten zusammengesetzt. Diese wiederum sind ausweislich der Figuren 3 und 4 an einer Verbindungsleiste 18 befestigt, die ihrerseits mit den Führungswagen 10 verschraubt ist. Als sämtliche Führungswagen 10 miteinander verbindendes Verbindungselement erstreckt sich die Verbindungsleiste 18 entlang sämtlicher Führungswagen 10. Ein weiteres Verbindungselement für sämtliche Führungswagen 10 verläuft in Form einer Verbindungsleiste 19 an der nach unten weisenden Seite der Führungswagen 10. Die Verbindungsleiste 19 steht dabei zu den Werkzeugkassetten 13 sowie den Pratzen 11 hin von den Führungswagen 10 vor und bildet mit ihrem betreffenden Überstand einen in Schwerkraftrichtung wirksamen Positionieranschlag für die Werkzeugkassetten 13 sowie die Pratzen 11. Mittels Wälzkörpern (Kugeln) 20 (Figuren 3 und 4) sind die Führungswagen 10 an einer Führungsschiene 21 der Tragschiene 8 spielfrei gelagert und in Richtung der x-Achse bewegbar geführt. Jede Pratze 11 sowie jede Werkzeugkassette 13 ist jeweils zwei eigenen Führungswagen 10 zugeordnet. Dabei sind die Pratzen 11 und die Werkzeugkassetten 13 auf die Führungswagen 10 verteilt. An jedem der Führungswagen 10 ist somit nur ein Teil der über die Pratzen 11 und die Werkzeugkassetten 13 wirkenden Last in die eigensteife Tragschiene 8 einzuleiten. Die einzelnen Führungswagen 10 können folglich verhältnismäßig klein bauen und besitzen dementsprechend einzeln und auch in Summe eine relativ geringe Masse. Die Pratzen 11 sowie die Werkzeugkassetten 13 einschließlich der darin untergebrachten Stanzwerkzeuge 14 sind bekannter Bauart. In Figur 3 ist ein Stanzwerkzeug 14 angedeutet. Es umfasst neben einem Stanzstempel mit Justierring einen Abstreifer sowie eine Stanzmatrize.

Die Tragschiene 8 ist in Richtung der x-Achse ortsunveränderlich, kann aber in Richtung einer zweiten Bewegungs- oder Koordinatenachse 22 (y-Achse) verfahren werden. Geführt wird die Tragschiene 8 bei ihrer Verfahrbewegung in Richtung der y-Achse an dem eine zweite Tragstruktur ausbildenden eigensteifen unteren Gestellschenkel 3. Dieser ist als Tisch ausgebildet und zum Zwecke der Führung der Tragschiene 8 an der Tischoberseite mit Führungseinrichtungen in Form von in Richtung der y-Achse verlaufenden Führungsschienen 23 versehen. An diesen ist die Tragschiene 8 über Führungseinheiten in Form von Führungswagen 24 in Richtung der y-Achse bewegbar gelagert. Die Führungswagen 24 zur Führung der Tragschiene 8 an dem unteren Gestellschenkel 3 sind in Figur 1 durch die Tragschiene 8 verdeckt. Für eine spielfreie Führung der Führungswagen 24 an dem unteren Gestellschenkel 3 sorgen Wälzkörper (Kugeln) 30.

Mit den Führungswagen 24 zur Führung der Tragschiene 8 verbunden sind konstruktiv damit übereinstimmende und ebenfalls an den Führungsschienen 23 des unteren Gestellschenkels 3 geführte Führungswagen 24 für eine Werkstückauflage in Form eines wie üblich zweiteiligen Werkstücktisches 25. Die Verbindung zwischen den dem Werkstücktisch 25 zugeordneten Führungswagen 24 und den der Tragschiene 8 zugeordneten Führungswagen 24 wird hergestellt über Verbindungselemente in Form von Verbindungsplatten 26. Diese besitzen eine nicht eigensteife Struktur. Infolgedessen verteilen sich die Last der Tragschiene 8 mit deren Anbauteilen und die Last des Werkstücktisches 25 im wesentlichen auf verschiedene Führungswagen 24, die dann entweder nahezu ausschließlich der Tragschiene 8 oder nahezu ausschließlich dem Werkstücktisch 25 zugeordnet sind. Die Führungswagen 24 können daher ebenso wie die zuvor beschriebenen Führungswagen 10 verhältnismäßig klein bauen und besitzen dementsprechend auch nur eine relativ kleine Masse.

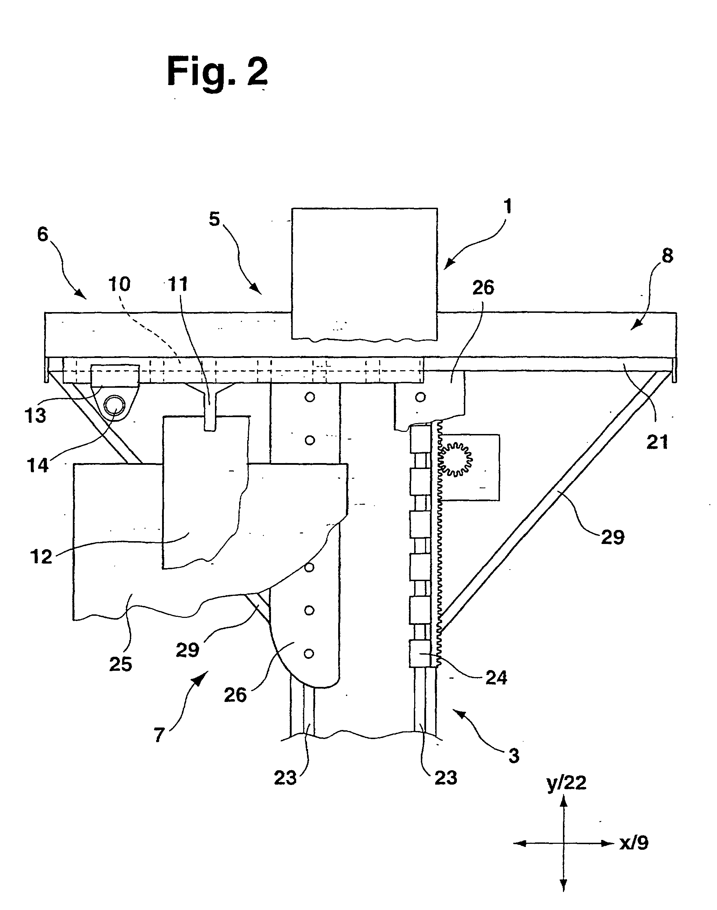

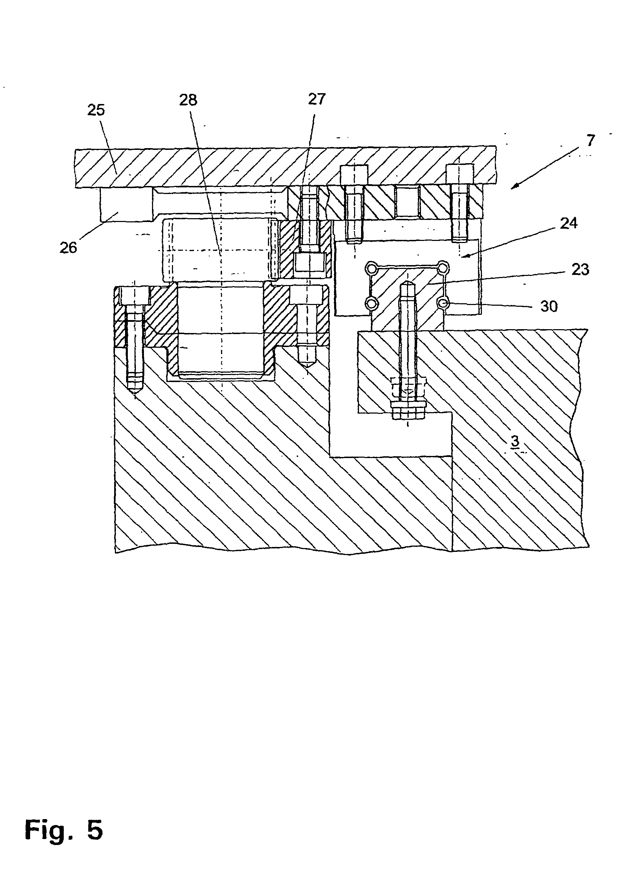

An der Unterseite der Verbindungsplatten 26 ist ausweislich Figur 5 eine Zahnstange 27 angebracht, die ebenso wie die in Richtung der x-Achse verlaufende Zahnstange 17 aus einzelnen Zahnstangenabschnitten zusammengesetzt ist. Mit der Zahnstange 27 kämmt ein Antriebsritzel 28 eines an dem unteren Gestellschenkel 3 stationär angebrachten Verfahrantriebes zum Bewegen der Führungseinheiten 24 an dem unteren Gestellschenkel 3 in Richtung der y-Achse. Aufgrund der über die Verbindungsplatten 26 hergestellten Verbindung zwischen den der Tragschiene 8 zugeordneten Führungswagen 24 und den dem Werkstücktisch 25 zugeordneten Führungswagen 24 werden Werkstücktisch 25 und Tragschiene 8 miteinander gekoppelt in Richtung der y-Achse bewegt. In den Figuren 1 und 2 gezeigte Verstrebungen 29 dienen der Stabilisierung der Tragschiene 8.

Bei Betrieb der Stanzmaschine 1, der wie üblich numerisch gesteuert ist, können das Blech 12 sowie die Stanzwerkzeuge 14 mittels der Koordinatenführung 5 in bekannter Weise in der durch die x-Achse sowie die y-Achse definierten Ebene relativ zu der nicht gezeigten Bearbeitungsstation in der gewünschten Weise positioniert werden. Die an der Tragschiene 8-gehaltenen Stanzwerkzeuge 14 lassen sich dabei in die Werkzeugaufnahmen an der Stanzstation einsetzen bzw. aus den genannten Werkzeugaufnahmen entnehmen. Von einer detaillierten Beschreibung dieser an sich bekannten Abläufe wird vorliegend abgesehen. Auf die insoweit umfassenden Ausführungen in DE-A-38 18 001 wird verwiesen. Der Inhalt dieser Druckschrift wird ausdrücklich der vorliegenden Offenbarung hinzugefügt.

Für die Stanzmaschine 1 von besonderer Bedeutung ist der Umstand, dass bei ihrem Betrieb an der Tragschiene 8 in Richtung der x-Achse und an dem unteren Gestellschenkel 3 in Richtung der y-Achse lediglich verhältnismäßig geringe Massen zu bewegen sind. Aufgrund dieses Umstandes lassen sich im Falle der Stanzmaschine 1 auch große Beschleunigungen an der Koordinatenführung 5 beherrschen und infolgedessen hohe Geschwindigkeiten bei der Werkstückbearbeitung erzielen.

## Patentansprüche

1. Werkzeugmaschine mit wenigstens einer Bearbeitungsstation sowie mit wenigstens einer Vorschubeinrichtung (5), mittels derer zumindest ein Werkstück (12) und/oder zumindest ein Bearbeitungswerkzeug (14) wenigstens in Richtung einer Bewegungsachse (x-Achse) relativ zu der Bearbeitungsstation angetrieben bewegbar ist und welche wenigstens eine Richtungsführung (6) mit einer Tragstruktur (8) umfasst, an welcher wenigstens eine Haltevorrichtung (11) für ein Werkstück (12) und/oder wenigstens eine Haltevorrichtung (13) für ein Bearbeitungswerkzeug (14) in Richtung der Bewegungsachse (x-Achse) angetrieben bewegbar geführt ist, wobei die Richtungsführung (6) eine Mehrzahl von an der Tragstruktur (8) in Richtung der Bewegungsachse (x-Achse) angetrieben bewegbar geführten und jeweils für sich gelagerten Führungseinheiten (10) aufweist und die Haltevorrichtungen (11, 13) auf die Führungseinheiten (10) verteilt an diesen angebracht sind, **dadurch gekennzeichnet, dass** Führungseinheiten (10) an der Tragstruktur (8) mittels wenigstens eines Zahnstangenabschnittes miteinander verbunden sind und/oder dass an Führungseinheiten (10) an der Tragstruktur (8) wenigstens ein Zahnstangenabschnitt angebracht und dabei an wenigstens einem, zugehörige Führungseinheiten (10) miteinander verbindenden Verbindungselement (18) befestigt ist, wobei der Zahnstangenabschnitt jeweils in Richtung der Bewegungsachse (x-Achse) verläuft und einen Teil eines Verfahrantriebes (15) zum Bewegen der Führungseinheiten (10) an der Tragstruktur (8) in Richtung der Bewegungsachse (x-Achse) bildet, welcher Verfahrantrieb (15) außerdem zumindest ein Antriebsritzel (16) umfasst, das mit dem Zahnstangenabschnitt kämmt.

2. Werkzeugmaschine nach Anspruch 1, **dadurch gekennzeichnet, dass** Führungseinheiten (10) an der Tragstruktur (8) mittels wenigstens einer Verbindungsleiste (18) miteinander verbunden sind.

3. Werkzeugmaschine nach Anspruch oder 2, **dadurch gekennzeichnet, dass** Führungseinheiten (10) an der Tragstruktur (8) als in Richtung ihrer Bewegung hintereinander liegende und miteinander verbundene Führungswagen (10) oder -schlitten ausgebildet sind.

4. Werkzeugmaschine mit wenigstens einer Bearbeitungsstation sowie mit wenigstens einer Vorschubeinrichtung (5), mittels derer zumindest ein Werkstück (12) und/oder zumindest ein Bearbeitungswerkzeug (14) in einer durch eine erste (x-Achse) sowie eine zweite Bewegungsachse (y-Achse) definierten Ebene relativ zu der Bearbeitungsstation angetrieben bewegbar ist und welche zwei Richtungsführungen (6, 7) umfasst, wobei die erste Richtungsführung (6) eine erste Tragstruktur (8) aufweist, an welcher wenigstens eine Haltevorrichtung (11) für ein Werkstück (12) und/oder wenigstens eine Haltevorrichtung (13) für ein Bearbeitungswerkzeug (14) in Richtung der ersten Bewegungsachse (x-Achse) angetrieben bewegbar geführt ist, wobei die zweite Richtungsführung (7) eine zweite Tragstruktur (3) aufweist, an welcher die erste Tragstruktur (8) sowie wenigstens eine ein Werkstück (12) in Schwerkraftrichtung lagernde Werkstückauflage (25) in Richtung der zweiten Bewegungsachse (y-Achse) angetrieben bewegbar geführt sind und wobei eine Mehrzahl von an der zweiten Tragstruktur (3) in Richtung der zweiten Bewegungsachse (y-Achse) angetrieben bewegbar geführten Führungseinheiten (24) vorgesehen ist, **dadurch gekennzeichnet, dass** die Last der ersten Tragstrücktür (8) und die Last der Werkstückaüflage (25) im Wesentlichen auf verschiedene Führungseinheiten (24) verteilt sind, indem die Führüngseinheiten (24) wenigstens zum Teil entweder im wesentlichen der ersten Tragstruktur (8) oder im wesentlichen der Werkstückauflage (25) zugeordnet sind.

5. Werkzeugmaschine nach Ansprüch 4, **dadurch gekennzeichnet, dass** die erste Richtungsführung (6) eine Mehrzahl von an der ersten Tragstruktur (8) in Richtung der ersten Bewegungsachse (x-Achse) angetrieben bewegbar geführten und jeweils für sich gelagerten Führungseinheiten (10) aufweist und jede Haltevorrichtung (11) für ein Werkstück (12) und/oder jede Haltevorrichtung (13) für ein Bearbeitungswerkzeug (14) einem Teil der Führungseinheiten (10) im wesentlichen zugeordnet ist.

6. Werkzeugmaschine nach einem der Ansprüche 4 oder 5, **dadurch gekennzeichnet, dass** Führungseinheiten (10) an der ersten Tragstruktur (8) und/oder Führungseinheiten (24) an der zweiten Tragstruktur (3) über wenigstens ein Verbindungselement miteinander verbunden sind.

7. Werkzeugmaschine nach einem der Ansprüche 4 bis 6, **dadurch gekennzeichnet, dass** Führungseinheiten (10) an der ersten Tragstruktur (8) und/oder Führungseinheiten (24) an der zweiten Tragstruktur (3) mittels wenigstens einer Verbindungsleiste (18, 19) miteinander verbunden sind.

8. Werkzeugmaschine nach einem der Ansprüche 4 bis 7, **dadurch gekennzeichnet, dass** Führungseinheiten (10) an der ersten Tragstruktur (8) und/oder Führungseinheiten (24) an der zweiten Tragstruktur (3) mittels wenigstens einer Verbindungsplatte (26) miteinander verbunden sind.

9. Werkzeugmaschine nach einem der Ansprüche 4 bis 8, **dadurch gekennzeichnet, dass** Führungseinheiten (10) an der ersten Tragstruktur (8) und/oder Führungseinheiten (24) an der zweiten Tragstruktur (3) mittels wenigstens eines in Richtung der ersten Bewegungsachse (x-Achse) verlaufenden Zahnstangenabschnittes oder mittels wenigstens eines in Richtung der zweiten Bewegungsachse (y-Achse) verlaufenden Zahnstangenabschnittes miteinander verbunden sind, mit welchem zumindest ein Antriebsritzel (16) eines Verfahrantriebes zum Bewegen der Führungseinheiten (10) an der ersten Tragstruktur (8) in Richtung der ersten Bewegungsachse (x-Achse) oder zumindest ein Antriebsritzel (28) eines Verfahrantriebes zum Bewegen der F_{ü}hrungseinheiten (24) an der zweiten Tragstruktur (3) in Richtung der zweiten Bewegungsachse (y-Achse) kämmt.

10. Werkzeugmaschine nach einem der Ansprüche 4 bis 9, **dadurch gekennzeichnet, dass** an Führungseinheiten (10) an der ersten Tragstruktur (8) und/oder an Führungseinheiten (24) an der zweiten Tragstruktur (3) wenigstens ein in Richtung der ersten Bewegungsachse (x-Achse) verlaufender Zahnstangenabschnitt eines Verfahrantriebes zum Bewegen der Führungseinheiten (10) an der ersten Tragstruktur (8) in Richtung der ersten Bewegungsachse (x-Achse) oder wenigstens ein in Richtung der zweiten Bewegungsachse (y-Achse) verlaufender Zahnstangenabschnitt eines Verfahrantriebes zum Bewegen der Führungseinheiten (24) an der zweiten Tragstruktur (3) in Richtung der zweiten Bewegungsachse (y-Achse) angebracht ist, wobei der betreffende Treibstangenabschnitt an wenigstens einem zugehörige Führungseinheiten (10, 24) miteinander verbindenden Verbindungselement (18, 26) befestigt ist.

11. Werkzeugmaschine nach einem der Ansprüche 4 bis 10, **dadurch gekennzeichnet, dass** die zweite Tragstruktur (3) als Tisch ausgebildet ist mit wenigstens einer an der Tischoberseite vorgesehenen Führungseinrichtung (23) zur Führung der Führungseinheiten (24) an der zweiten Tragstruktur (3) in Richtung der zweiten Bewegungsachse (y-Achse).

12. Werkzeugmaschine nach einem der Ansprüche 4 bis 11, **dadurch gekennzeichnet, dass** Führungseinheiten (10) an der ersten Tragstruktur (8) und/oder Führungseinheiten (24) an der zweiten Tragstruktur (3) als in Richtung ihrer Bewegung hintereinanderliegende und miteinander verbundene Führungswagen (10, 24) oder -schlitten ausgebildet sind.

## Claims

1. A machine tool having at least one operating position and at least one advancing mechanism (5), by means of which advancing mechanism at least one work piece (12) and/or at least one operating tool (14) is driveably movable in the direction of at least one axis of motion (x-axis) relative to the operating position, and which advancing mechanism comprises at least one directional guide (6) having a bearing structure (8) on which at least one holder (11) for a work piece (12) and/or at least one holder (13) for an operating tool (14) is guided so as to be driveably movable in the direction of the axis of motion (x-axis), wherein the directional guide (6) has a plurality of guide members (10) guided so as to be driveably movable on the bearing structure (8) in the direction of the axis of motion (x-axis) and each being independently mounted, and the holders (11, 13) are fitted on the guide members (10) distributed over the said guide members, **characterised in that** guide members (10) on the bearing structure (8) are connected to one another by means of at least one tooth-rack portion, and/or **in that** at least one tooth-rack portion is fitted on guide members (10) on the bearing structure (8) and at the same time is attached to least one connecting member (18) connecting associated guide members (10) to one another, the tooth-rack portion in each case extending in the direction ofthe axis of motion (x-axis) and forming part of a translating drive (15) for moving the guide members (10) on the bearing structure (8) in the direction of the axis of motion (x-axis), which translating drive (15) furthermore comprises at least one driving pinion (16) which engages with the tooth-rack portion.

2. A machine tool according to Claim 1, **characterised in that** guide members (10) on the bearing structure (8) are connected to one another by means of at least one connecting bar (18).

3. A machine tool according to Claim 1 or 2, **characterised in that** guide members (10) on the bearing structure (8) are in the form of guide carriages (10) or guide slides connected to one another so as to be positioned one behind the other in the direction of their motion.

4. A machine tool having at least one operating position and at least one advancing mechanism (5), by means of which advancing mechanism at least one work piece (12) and/or at least one operating tool (14) is driveably movable relative to the operating position in a plane defined by a first axis of motion (x-axis) and a second axis of motion (y-axis), and which advancing mechanism comprises two directional guides (6, 7), wherein the first directional guide (6) has a first bearing structure (8) on which at least one holder (11) for a work piece (12) and/or at least one holder (13) for an operating tool (14) is guided so as to be driveably movable in the direction of the first axis of motion (x-axis) and the second directional guide (7) having a second bearing structure (3) on which the first bearing structure (8) and at least one work-piece support (25) supporting a work piece (12) in the direction of gravity are guided so as to be driveably movable in the direction of the second axis of motion (y-axis), and wherein a plurality of guide members (24) guided so as to be driveably movable on the second bearing structure (3) in the direction of the second axis of motion (y-axis) are provided, **characterised in that** the load of the first bearing structure (8) and the load of the work-piece support (25) are distributed substantially on to different guide members (24), at least some of the guide members (24) being associated either substantially with the first bearing structure (8) or substantially with the work-piece support (25).

5. A machine tool according to Claim 4, **characterised in that** the first directional guide (6) has a plurality of guide members (10) guided so as to be driveably movable on the first bearing structure (8) in the direction of the first axis of motion (x-axis) and each being independently mounted, and each holder (11) for a work piece (12) and/or each holder (13) for an operating tool (14) is associated substantially with a number of the guide members (10).

6. A machine tool according to one of Claims 4 or 5, **characterised in that** guide members (10) on the first bearing structure (8) and/or guide members (24) on the second bearing structure (3) are connected to one another via at least one connecting member.

7. A machine tool according to one of Claims 4 to 6, **characterised in that** guide members (10) on the first bearing structure (8) and/or guide members (24) on the second bearing structure (3) are connected to one another by means of the at least one connecting bar (18, 19).

8. A machine tool according to one of Claims 4 to 7, **characterised in that** guide members (10) on the first bearing structure (8) and/or guide members (24) on the second bearing structure (3) are connected to one another by means of at least one connecting plate (26).

9. A machine tool according to one of Claims 4 to 8, **characterised in that** guide members (10) on the first bearing structure (8) and/or guide members (24) on the second bearing structure (3) are connected to one another by means of the least one tooth-rack portion extending in the direction of the first axis of motion (x-axis) or by means of the least one tooth-rack portion extending in the direction of the second axis of motion (y-axis), which tooth-rack portion engages with at least one drive pinion (16) of a translating drive for moving the guide members (10) on the first bearing structure (8) in the direction of the first axis of motion (x-axis) or with at least one drive pinion (28) of a translating drive for moving the guide members (24) on the second bearing structure (3) in the direction of the second axis of motion (y-axis).

10. A machine tool according to one of Claims 4 to 9, **characterised in that** at least one tooth-rack portion of a translating drive for moving the guide members (10) on the first bearing structure (8) in the direction of the first axis of motion (x-axis), which tooth-rack portion extends in the direction of the first axis of motion (x-axis), or at least one tooth-rack portion of a translating drive for moving the guide members (24) on the second bearing structure (3) in the direction of the second axis of motion (y-axis), which tooth-rack portion extends in the direction of the second axis of motion (y-axis) is fitted on guide members (10) on the first bearing structure (8) and/or on guide members (24) on the second bearing structure (3), the respective tooth-rack portion being attached to at least one connecting member (18, 26) connecting associated guide members (10, 24) with the one another.

11. A machine tool according to one of Claims 4 to 10, **characterised in that** the second bearing structure (3) is in the form of a table having at least one guiding device (23) provided on its upper surface of the purpose of guiding the guide members (24) on the second bearing structure (3) in the direction of the second axis of motion (y-axis).

12. A machine tool according to one of Claims 4 to 11, **characterised in that** guide members (10) on the first bearing structure (8) and/or guide members (24) on the second bearing structure (3) are in the form of guide carriages (10, 24) or guide slides connected to one another so as to be positioned one behind the other in the direction of their motion.

## Revendications

1. Machine-outil avec au moins un poste d'usinage, ainsi qu'avec au moins un dispositif d'avance (5), au moyen duquel au moins une pièce usinée (12) et /ou au moins un outil d'usinage (14) peuvent être déplacés de façon motorisée par rapport au poste d'usinage au moins dans la direction d'un axe de déplacement (axe x), et qui comprend au moins un guidage d'axe (6) doté d'une structure porteuse (8), sur laquelle au moins un dispositif de fixation (11) pour une pièce usinée (12) et/ou au moins un dispositif de fixation (13) pour un outil d'usinage (14) sont guidés en déplacement motorisé dans la direction de l'axe de déplacement (axe x), le guidage d'axe (6) présentant une pluralité d'unités de guidage (10) individuellement montées sur la structure porteuse (8) en étant guidées en déplacement motorisé dans la direction de l'axe de déplacement (axe x), et les dispositifs de fixation (11, 13) étant installés sur les unités de guidage (10) en étant répartis sur celles-ci, **caractérisée en ce que** des unités de guidage (10) présentes sur la structure porteuse (8) sont mutuellement reliées au moyen d'au moins un tronçon de crémaillère, et/ou **en ce qu'**au moins un tronçon de crémaillère est installé surdes unités de guidage (10) présentes sur la structure porteuse (8) et est fixé sur au moins un élément de liaison (18) reliant entre elles des unités de guidage associées (10), le tronçon de crémaillère s'étendant respectivement dans la direction de l'axe de déplacement (axe x) et constituant une partie d'un entraînement en translation (15) destiné à déplacer les unités de guidage (10) sur la structure porteuse (8) dans la direction de l'axe de déplacement (axe x), l'entraînement en translation (15) comprenant en outre au moins un pignon d'entraînement (16), qui engrène avec le tronçon de crémaillère.

2. Machine-outil selon la revendication 1, **caractérisée en ce que** des unités de guidage (10) présentes sur la structure porteuse (8) sont mutuellement reliées au moyen d'au moins une barre de liaison (18).

3. Machine-outil selon la revendication 1 ou 2, **caractérisée en ce que** des unités de guidage (10) présentes sur la structure porteuse (8) sont réalisées sous la forme de chariots (10) ou coulisseaux de guidage mutuellement reliés et disposés en succession dans leur direction de déplacement.

4. Machine-outil avec au moins un poste d'usinage, ainsi qu'avec au moins un dispositif d'avance (5), au moyen duquel au moins une pièce usinée (12) et /ou au moins un outil d'usinage (14) peuvent être déplacés de façon motorisée par rapport au poste d'usinage dans un plan défini par un premier axe de déplacement (axe x) et un deuxième axe de déplacement (axe y), et qui comprend deux guidages d'axe (6, 7), le premier guidage d'axe (6) présentant une première structure porteuse (8), sur laquelle au moins un dispositif de fixation (11) pour une pièce usinée (12) et/ou au moins un dispositif de fixation (13) pour un outil d'usinage (14) sont guidés en déplacement motorisé dans la direction du premier axe de déplacement (axe x), le deuxième guidage d'axe (7) présentant une deuxième structure porteuse (3), sur laquelle la première structure porteuse (8) ainsi qu'au moins un support de pièce (25) supportant une pièce usinée (12) dans la direction de la force de gravité sont guidés en déplacement motorisé dans la direction du deuxième axe de déplacement (axe y), et une pluralité d'unités de guidage (24), guidées en déplacement motorisé sur la deuxième structure porteuse (3) dans la direction du deuxième axe de déplacement (axe y), étant prévue, **caractérisée en ce que** la charge de la première structure porteuse (8) et la charge du support de pièce (25) sont essentiellement réparties sur différentes unités de guidage (24), par le fait que les unités de guidage (24) sont associées au moins pour partie, soit essentiellement à la première structure porteuse (8), soit essentiellement au support de pièce (25)

5. Machine-outil selon la revendication 4, **caractérisée en ce que** le premier guidage d'axe (6) présente une pluralité d'unités de guidage (10) individuellement montées sur la première structure porteuse (8) en étant guidées en déplacement motorisé dans la direction du premier axe de déplacement (axe x), et chaque dispositif de fixation (11) pour une pièce usinée (12) et/ou chaque dispositif de fixation (13) pour un outil d'usinage (14) est essentiellement associé à une partie des unités de guidage (10).

6. Machine-outil selon la revendication 4 ou 5, **caractérisée en ce que** des unités de guidage (10) présentes sur la première structure porteuse (8) et/ou des unités de guidage (24) présentes sur la deuxième structure porteuse (3) sont mutuellement reliées par l'intermédiaire d'au moins un élément de liaison.

7. Machine-outil selon l'une des revendications 4 à 6, **caractérisée en ce que** des unités de guidage (10) présentes sur la première structure porteuse (8) et/ou des unités de guidage (24) présentes sur la deuxième structure porteuse (3) sont mutuellement reliées au moyen d'au moins une barre de liaison (18, 19).

8. Machine-outil selon l'une des revendications 4 à 7, **caractérisée en ce que** des unités de guidage (10) présentes sur la première structure porteuse (8) et/ou des unités de guidage (24) présentes sur la deuxième structure porteuse (3) sont mutuellement reliées au moyen d'au moins une plaque de liaison (26).

9. Machine-outil selon l'une des revendications 4 à 8, **caractérisée en ce que** des unités de guidage (10) présentes sur la première structure porteuse (8) et/ou des unités de guidage (24) présentes sur la deuxième structure porteuse (3) sont mutuellement reliées au moyen d'au moins un tronçon de crémaillère s'étendant dans la direction du premier axe de déplacement (axe x) ou au moyen d'au moins un tronçon de crémaillère s'étendant dans la direction du deuxième axe de déplacement (axe y), tronçon avec lequel engrène au moins un pignon d'entraînement (16) d'un entraînement en translation destiné à déplacer les unités de guidage (10) sur la première structure porteuse (8) dans la direction du premier axe de déplacement (axe x), ou au moins un pignon d'entraînement (28) d'un entraînement en translation destiné à déplacer les unités de guidage (24) sur la deuxième structure porteuse (3) dans la direction du deuxième axe de déplacement (axe y).

10. Machine-outil selon l'une des revendications 4 à 9, **caractérisée en ce qu'**au moins un tronçon de crémaillère - s'étendant dans la direction du premier axe de déplacement (axe x) - d'un entraînement en translation destiné à déplacer les unités de guidage (10) sur la première structure porteuse (8) dans la direction du premier axe de déplacement (axe x), ou au moins un tronçon de crémaillère - s'étendant dans la direction du deuxième axe de déplacement (axe y) - d'un entraînement en translation destiné à déplacer les unités de guidage (24) sur la deuxième structure porteuse (3) dans la direction du deuxième axe de déplacement (axe y), est installé sur des unités de guidage (10) présentes sur la première structure porteuse (8) et/ou sur des unités de guidage (24) présentes sur la deuxième structure porteuse (3), le tronçon de crémaillère concerné étant fixé sur au moins un élément de liaison (18, 26) reliant entre elles des unités de guidage associées (10, 24).

11. Machine-outil selon l'une des revendications 4 à 10, **caractérisée en ce que** la deuxième structure porteuse (3) est réalisée sous forme de plateau, avec au moins un dispositif de guidage (23) prévu sur le dessus du plateau et destiné à guider les unités de guidage (24) sur la deuxième structure porteuse (3) dans la direction du deuxième axe de déplacement (axe y).

12. Machine-outil selon l'une des revendications 4 à 11, **caractérisée en ce que** des unités de guidage (10) présentes sur la première structure porteuse (8) et/ou des unités de guidage (24) présentes sur la deuxième structure porteuse (3) sont réalisées sous la forme de chariots (10, 24) ou coulisseaux de guidage mutuellement reliés et disposés en succession dans leur direction de déplacement.
